# EUROPÄISCHE PATENTSCHRIFT

(11) **EP 3 898 464 B1**
(45) Veröffentlichungstag und Bekanntmachung des Hinweises auf die Patenterteilung: **17.04.2024**
(21) Anmeldenummer: 19835644.6
(22) Anmeldetag: 19.12.2019
(51) Int. Cl.: B65G 23/08, G05B 19/042, G05B 19/418

(54) **FÖRDERANORDNUNG MIT INTEGRIERTER SENSORFUNKTIONSEINHEIT**
CONVEYOR ARRANGEMENT WITH INTEGRATED SENSOR FUNCTION UNIT
SYSTÈME DE TRANSPORT À UNITÉ À FONCTION DE DÉTECTION INTÉGRÉE

(30) Priorität: 21.12.2018 DE 102018133481
(43) Veröffentlichungstag der Anmeldung: 27.10.2021
(73) Patentinhaber: Interroll Holding AG, 6592 Sant'Antonino (CH)
(72) Erfinder: HAMPE, Andreas, 41836 Hückelhoven (DE); HENZE, Herbert, 41836 Hückelhoven (DE); CHABRIÉ, Carsten, 41836 Hückelhoven (DE)
(74) Vertreter: Kohlhof, Stephan
(86) Internationale Anmeldenummer: PCT/EP2019/086242
(87) Internationale Veröffentlichungsnummer: WO 2020/127687

(56) Entgegenhaltungen:
- EP-A2- 0 953 524
- WO-A2-2018/024917
- DE-A1-102015 106 034
- DE-U1- 29 515 825

## Beschreibung

Die Erfindung betrifft eine Förderanordnung, eine Fördervorrichtung, eine motorbetriebene Förderrolle und ein Verfahren zum Fördern eines Förderguts.

In einer Förderanordnung wird eine motorbetriebene Förderrolle eingesetzt. Oftmals sind mehrere Förderanordnungen in einer Fördervorrichtung verbaut. Die Fördervorrichtung ist häufig aus mehreren Förderzonen aufgebaut, die von einem zu fördernden Gegenstand, dem Fördergut, nacheinander entlang einer Förderstrecke durchlaufen werden. Jede Förderzone weist hierbei zumindest eine motorbetriebene Förderrolle und in aller Regel weitere Förderrollen auf. Eine Förderanordnung kann eine solche Förderzone als Teil der Förderstrecke bilden. Durch diese Aufbauweise können in der Fördervorrichtung mehrere Gegenstände gleichzeitig gefördert werden und ein Kontakt zwischen einzelnen Fördergütern vermieden werden, indem die motorbetriebenen Förderrollen der einzelnen Förderzonen entsprechend angesteuert werden. Dies realisiert die sogenannte staudrucklose Förderung, die in vielen Anwendungen heute angestrebt wird, um eine hohe Sicherheit vor Beschädigungen des Förderguts zu gewährleisten.

Es ist beispielsweise bekannt, eine motorbetriebene Förderrolle staudrucklos im Einzelplatzabzug anzusteuern. In diesem Betriebsmodus wird die Förderrolle nur zur Förderung eines Förderguts in ihrer Förderzone angesteuert, wenn die in Förderrichtung nachgelagerte, benachbarte Förderzone frei ist, also nicht mit einem weiteren Fördergut belegt ist. Eine andere staudrucklose Betriebsweise ist der sogenannte Blockabzugsmodus. Im Blockabzugsmodus werden alle motorbetriebenen Förderrollen entlang benachbarter Förderzonen gleichzeitig angesteuert, sodass auch bei benachbarten, mit Fördergütern besetzten Förderzonen eine Förderung ohne Kontakt möglich ist, da die Förderzone, in der ein Fördergut hineingefördert wird, gleichzeitig das Fördergut, das bisher in dieser Förderzone war, herausbefördert.

Mittels der staudrucklosen Förderung können Beschädigungen der Gegenstände zuverlässig vermieden werden, obwohl diese in kurz beabstandeter Folge in einer Reihe entlang der Förderstrecke befördert werden. Problematisch hierbei ist, dass sich sowohl Parameter, welche für die Förderung auf Seiten der Förderanordnung relevant sind, im Verlauf des Betriebs ändern können als auch, dass auf Seiten des geförderten Gegenstands solche Einflussparameter variabel sind. So kann sich beispielsweise der Reibwert zwischen der Förderrolle und dem geförderten Gegenstand durch Verschleiß, Verschmutzung und unterschiedliche Materialbeschaffenheiten der Unterseite des Gegenstands ändern, was zu mehr oder weniger Schlupf führt. Um Beschädigungen der Gegenstände zu vermeiden, die gerade bei aneinander gestauten mehreren Gegenständen durch eine Einwirkung der addierten Förderkräfte auf den vordersten Gegenstand auftreten können, ist es daher bekannt, die Lage der vorderen und hinteren Enden der Gegenstände zu überwachen.

Maßgeblich für diese Überwachung sind oberhalb der Förderrollen angeordnete Sensoren und es ist vorbekannt, motorbetriebene Förderrollen solcher Förderanordnungen in Abhängigkeit eines Sensorsignals solcher Sensoren zu steuern. Üblicherweise werden dazu Lichtschranken entlang der Förderstrecke angeordnet, die seitlich an der Förderstrecke an einem Rahmen befestigt sind, in dem die Förderrollen drehbar gelagert sind. Dabei ist im Stand derTechnikje Förderzone ein Sensor vorgesehen. In Abhängigkeit eines Sensorsignals eines solchen Sensors wird die motorbetriebene Förderrolle der Förderzone angesteuert. Das Sensorsignal bzw. dessen Wert hängt davon ab, ob und wann der Sensor ein Fördergut detektiert bzw. erfasst.

Um ein Sensorsignal eines solchen Sensors zur Steuerung einer motorbetriebenen Förderrolle zu nutzen, sind üblicherweise entsprechende kabelgebundene Datenübertragungen von dem Sensor an eine zentrale Steuerungseinheit und von der zentralen Steuerungseinheit zu der motorbetriebenen Förderrolle einzurichten. Es ist ferner bekannt, das Sensorsignal des Sensors einer oder mehreren dezentralen Steuerungseinheiten zu übertragen, die entlang der Förderstrecke angeordnet sind. Diese entlang der Förderstrecke angeordneten dezentralen Steuerungssysteme sind miteinander zur Signalübertragung gekoppelt.

Nachteilig an diesem Stand der Technik ist zum einen der erhebliche Verkabelungssaufwand, der damit einhergeht. Ferner sind solche entlang der Förderstrecke angeordneten Sensoren und die entsprechende Verkabelung Umwelteinflüssen ausgesetzt, die das Erfassen des zu fördernden Förderguts vollständig unterbinden, stören oder zumindest einschränken können. Insbesondere können die Sensoren und auch die Verkabelung, beispielsweise bei Montage-, Instandhaltungs- oder Wartungsarbeiten, beschädigt werden. Solche Störungen können einerseits zum kompletten Stillstand einer Fördervorrichtung führen, was insbesondere in Logistikzentren oder Postverteilzentren zu erheblichen Kosten und Verzögerungen im Ablauf führt. Zum anderen können diese Störungen einen kumulierten Staudruck in der Förderstrecke nach sich ziehen, was zur Beschädigung der Fördergüter führt.

Die WO 2018/024917 A2 offenbart eine motorbetriebene Förderrolle mit: einem Förderrollenrohr, das drehbar um ein Achselement gelagert ist; einer innerhalb des Förderrollenrohres angeordnete Antriebseinheit, die für eine Drehmomenterzeugung und Rotationsbewegung zwischen dem Achselement und dem Förderrollenrohr ausgebildet und mit dem Achselement und dem Förderrollenrohr mechanisch gekoppelt ist; einer von außerhalb des Förderrollenrohres zu der Antriebseinheit verlaufende Energieleitung; eine von außerhalb des Förderrollenrohres zu der Antriebseinheit verlaufende Datenleitung. Die Datenleitung als Busleitung ausgebildet ist und über eine in dem Förderrollenrohr angeordnete Busschnittstelle mit der Antriebseinheit signaltechnisch verbunden. Innerhalb des Förderrollenrohres ist ein Detektor angeordnet, der ausgebildet ist, um eine Eigenschaft eines auf dem Förderrollenrohr aufliegenden Fördergutes zu erfassen. Die Erteilungsbehörde sieht in der WO 2018/024917 A2 die Merkmal des Oberbegriffs des Anspruchs 1 als offenbart an.

Somit ist es allgemeines Ziel, eine Förderanordnung, eine motorbetriebene Förderrolle und eine Fördervorrichtung bereitzustellen, die im Betriebszustand zuverlässig ein beschädigungsfreies Fördern der Fördergüter ermöglicht.

Diese Aufgabe wird durch eine Förderanordnung nach Anspruch 1 gelöst.

In Abhängigkeit des Sensorsignals einer Förderanordnung können auch eine oder mehrere Antriebseinheiten von motorbetriebenen Förderrollen von in Förderrichtung nachgelagerten und/oder vorgelagerten Förderanordnungen mittels der Steuerungseinheit angesteuert sein. Die Förderanordnung kann auch in Abhängigkeit eines Sensorsignals einer in Fördervorrichtung vor- oder nachgelagerten Förderanordnung angesteuert sein. Dabei kann das binäre

Sensorsignal ein analoges oder ein digitales Signal sein und die Steuerungseinheit zur Verarbeitung eines entsprechend analogen oder digitalen Signals ausgebildet sein. Vorzugsweise ist die Sensorfunktionseinheit ausgebildet mechanische und/oder elektrische und/oder elektromagnetische und/oder optische Messgrößen zu erfassen. Solche Messgrößen stellen beispielsweise Gewichtsänderungen an der motorbetriebenen Förderrolle, Verformungen der motorbetriebenen Förderrolle, Änderungen der Helligkeit bzw. Lichtverhältnisse an der motorbetriebenen Förderrolle, oder Änderungen elektrischer oder elektromagnetischer Größen, insbesondere elektrischer oder elektromagnetischer Betriebsgrößen der Antriebseinheit, an oder im Umfeld der motorbetriebenen Förderrolle dar. Beispielsweise ist die Sensorfunktionseinheit eine Kraftmessdose, ein Dehnungsmessstreifen, ein optischer Sensor, ein kapazitiver Sensor oder ein induktiver Sensor oder eine Kombination daraus. Ferner kann die Sensorfunktionseinheit ausgebildet sein, eine Drehzahl und/oder ein Drehmoment zu erfassen.

Es ist denkbar, dass die motorbetriebene Förderrolle mehrere Sensorfunktionseinheiten bzw. mehrere Sensoren aufweist. Insbesondere umfasst die motorbetriebene Förderrolle mehrere Sensoren zum Erfassen verschiedener Messgrößen.

Bevorzugt ist vorgesehen, dass die Sensorfunktionseinheit für den Einsatz bei der üblicherweise im Betrieb der motorbetriebenen Förderrolle erzeugten bzw. erreichten und/oder herrschenden Betriebstemperaturen in geeigneter Weise ausgebildet ist. Insbesondere ist die Sensorfunktionseinheit für den Einsatz bei Betriebstemperaturen von
mindestens -30°C, -20, -10°C, 0°C und maximal +20°C, +30°C, +40°C, +50°C ausgebildet. In dieser bevorzugten Fortbildung ist die Sensorfunktionseinheit vorzugsweise an drehbar gelagerten Elementen der motorbetriebenen Förderrolle, etwa dem Rollenkörper, angeordnet. Es kann allerdings auch bevorzugt sein, die Sensorfunktionseinheit an nicht drehbar gelagerten Elementen der motorbetriebenen Förderrolle, etwa dem Achselement, anzuordnen.

Die Sensorfunktionseinheit ist mit der Steuerungseinheit und die Steuerungseinheit mit der Antriebseinheit signaltechnisch verbunden. Vorzugsweise ist die Steuerungseinheit mit einer oder mehreren Antriebseinheiten von motorbetriebenen Förderrollen von in Förderrichtung nachgelagerten und/oder vorgelagerten Förderanordnungen signaltechnisch gekoppelt. Die Steuerungseinheit kann als dezentrale Steuerungseinheit ausgebildet sein, die mit weiteren Steuerungseinheiten, insbesondere dezentralen Steuerungseinheiten, signaltechnisch gekoppelt ist, beispielsweise zur Übertragung des Sensorsignals. Ferner kann die Steuerungseinheit als zentrale Steuerungseinheit ausgebildet sein, die mit mehreren Förderanordnungen, insbesondere jeder Förderanordnung einer Fördervorrichtung, respektive den Antriebseinheiten der motorbetriebenen Förderrollen signaltechnisch gekoppelt ist.

In Abhängigkeit des Sensorsignals erzeugt die Steuerungseinheit ein Steuerungssignal, mit dem die Antriebseinheit angesteuert wird. Dazu enthält das Steuerungssignal Daten mit einem durch das Steuerungssignal vorbestimmten Charakteristikverlauf in einem Förderbetrieb, dem Steuerungsablauf. Vorzugsweise ist der Charakteristikverlauf ausgewählt aus einem Antriebsdrehmoment, und/oder einem Antriebsdrehmomentverlauf, und/oder einer Geschwindigkeit, und/oder einem Geschwindigkeitsverlauf, und/oder einem Bremsdrehmoment, und/oder einem Bremsdrehmomentverlauf, und/oder einer Drehrichtung, und/oder Förderdurchsatz, und/oder Staumeldung, und/oder einer Kombination von zwei oder mehr dieser Charakteristika. Es ist ferner bevorzugt, dass die Steuerungseinheit das Steuersignal in Abhängigkeit des Sensorsignals und in Abhängigkeit einer Abweichung eines tatsächlichen Charakteristikverlaufs von dem vorbestimmten Charakteristikverlauf ausbildet. Dazu ist vorgesehen, dass der vorbestimmte Charakteristikverlauf mit dem tatsächlichen Charakteristikverlauf abgeglichen wird. Vorzugsweise ist die Steuerungseinheit ausgebildet, den vorbestimmten Charakteristikverlauf mit dem tatsächlichen Charakteristikverlauf abzugleichen.

Folglich ist der Förderanordnung eine Steuerungseinheit mit vollständiger Ausbildung zur Steuerung eines Förderprozesses durch die motorbetriebene Förderrolle anhand eines vorbestimmten Charakteristikverlaufs zugeordnet. Mit der Förderanordnung kann daher ein Förderprozess entlang einer gesamten Förderstrecke durch entsprechende Programmierung der Steuerungseinheit realisiert werden, bei dem beispielsweise aufgrund eines zugeführten Sensorsignals die Antriebseinheit angesteuert wird und hierdurch die Förderstrecke gesteuert werden kann. Ferner können auf diese Weise eine oder mehrere in Förderrichtung vor- und/oder nachgelagerte Förderanordnungen eine Förderung eines Förderguts ausführen, ohne dass hierbei die Notwendigkeit einer weiteren übergeordneten

Steuerungseinheit und einer entsprechend notwendigen Signalübermittlung zu und von dieser übergeordneten Steuerungseinheit besteht.

Die Sensorfunktionseinheit innerhalb des Rollenkörpers ist vor Beschädigungen und Umwelteinflüssen, wie Feuchtigkeit, Staub, Fetten, wechselhaften Lichtverhältnissen etc. in besonders geeigneter Weise geschützt. Insbesondere schützt der Rollenkörper die Sensorfunktionseinheit bei Montage-, Instandhaltungs- oder Wartungsarbeiten vor Beschädigungen durch unsachgemäße Handhabung. Ferner ermöglicht diese Anordnung die Montage der Sensorfunktionseinheit unter definierten Fertigungsbedingungen, was die Anzahl fehlmontierter Sensorfunktionseinheiten einerseits reduziert und andererseits die Sensormontage beim Aufbau einer Fördervorrichtung nicht mehr erfordert. Insbesondere minimieren solche mit einer Sensorfunktionseinheit vormontierten motorbetriebenen Förderrollen in besonders bevorzugter Weise den Aufwand der Ausrichtung und Justage der Sensorfunktionseinheit. Die Sensorfunktionseinheit kann beispielsweise einen Ultraschallsensor oder einen Mikrowellensensor umfassen. Die Sensorfunktionseinheit ist mit diesen Sensoren oder anderen Sensoren ausgebildet, um einen Zustand außerhalb des Rollenkörpers zu erfassen, nämlich die Anwesenheit und Abwesenheit eines Fördergutes oberhalb der Rolle als binäres Signal zu erfassen.

Zudem sind solche erfindungsgemäßen Förderanordnungen aufgrund der kompakten Bauweise insbesondere für Einsatzbereiche mit hohen Anforderungen an die Hygiene geeignet.

Gemäß einer ersten bevorzugten Ausführungsform ist vorgesehen, dass die Steuerungseinheit innerhalb des Rollenkörpers angeordnet ist.

Gemäß dieser bevorzugten Ausführungsform ist innerhalb des Rollenkörpers eine Steuerungseinheit angeordnet, die insbesondere zur Steuerung des Förderprozesses durch die motorbetriebene Förderrolle anhand eines Sensorsignals ausgebildet sein kann. Damit benötigt die Förderanordnung bzw. motorbetriebene Förderrolle keine weitere außerhalb des Rollenkörpers angeordnete Steuerungseinheit, mit der sie verbunden ist und von der sie Steuerungssignale empfängt.

Ferner ist bevorzugt vorgesehen, dass die Steuerungseinheit für den Einsatz bei der üblicherweise im Betrieb der motorbetriebenen Förderrolle erzeugten bzw. erreichten Betriebstemperaturen in geeigneter Weise ausgebildet ist. Insbesondere ist die Steuerungseinheit für den Einsatz bei Betriebstemperaturen von mindestens -30°C, -20°C, -10°C, 0°C und maximal +20°C, +30°C, +40°C, +50°C ausgebildet. In dieser bevorzugten Fortbildung kann die Sensorfunktionseinheit vorzugsweise an drehbar gelagerten Elementen der motorbetriebenen Förderrolle, etwa dem Rollenkörper, angeordnet sein. Es kann auch bevorzugt sein, die Sensorfunktionseinheit an nicht drehbar gelagerten Elementen der motorbetriebenen Förderrolle, etwa dem Achselement, anzuordnen. Ferner kann eine Steuerungseinheit die Sensorfunktionseinheit umfassen.

Die Steuerungseinheit innerhalb des Rollenkörpers ist vor Beschädigungen und Umwelteinflüssen, wie Feuchtigkeit, Staub, Fetten, wechselhaften Lichtverhältnissen etc. in besonders geeigneter Weise geschützt. Insbesondere schützt der Rollenkörper die Steuerungseinheit bei Montage-, Instandhaltungs- oder Wartungsarbeiten vor Beschädigungen durch unsachgemäße Handhabung. Ferner ermöglicht diese Anordnung die Montage der Sensorfunktionseinheit unter definierten Fertigungsbedingungen, was die Anzahl fehlmontierter Sensorfunktionseinheiten einerseits reduzieren kann und andererseits die Montage der Steuerungseinheit beim Aufbau einer Fördervorrichtung nicht mehr erfordert.

Ferner wird der Aufwand sowohl in der Montage als auch für die Wartung und Instandhaltung in vorteilhafter Weise reduziert - die innerhalb des Rollenkörpers angeordnete Steuerungseinheit ermöglicht eine direkte, bei der Fertigung der motorbetriebenen Förderrolle erfolgende Verbindung mit der Antriebseinheit, minimiert also den Verkabelungsaufwand.

Zudem ist es bevorzugt, dass die Sensorfunktionseinheit zusätzlich ein Analogsignal als Sensorsignal
bereitstellt.

Insbesondere ist die Sensorfunktionseinheit ausgebildet, ein Spannungssignal oder ein Stromsignal als Analogsignal bereitzustellen. Gemäß dieser bevorzugten Ausführungsform ist vorgesehen, dass die Steuerungseinheit ausgebildet ist, von der Sensorfunktionseinheit bereitgestellte Analogsignale zu verarbeiten. In vorteilhafter Weise schirmt der Rollenkörper die Sensorfunktionseinheit und insbesondere das Analogsignal vor Störeinflüssen ab und ermöglicht somit ein Sensorsignal mit geringem Rauschanteilen (Störsignalen) bereitzustellen.

Gemäß einer weiteren bevorzugten Ausführungsform ist vorgesehen, dass die Antriebseinheit die Sensorfunktionseinheit umfasst oder selbst ist, und/oder, die Sensorfunktionseinheit einen von der Antriebseinheit getrennten Sensor umfasst oder selbst ist.

Gemäß einer Ausführung dieser bevorzugten Fortbildung ist die Antriebseinheit die Sensorfunktionseinheit oder umfasst diese. In dieser bevorzugten Ausführung können insbesondere eine an der Antriebseinheit anliegende Spannung, ein an der Antriebseinheit anliegender Strom und/oder ein an der Antriebseinheit anliegendes Magnetfeld das von der Sensorfunktionseinheit bereitgestellte Sensorsignal darstellen. Ferner kann in dieser bevorzugten Ausführung das Sensorsignal einer Drehzahl, einem Drehmoment und/oder einer Temperatur entsprechen. In vorteilhafter Weise erfordert diese Ausführung keine zusätzlichen Sensoren. Dies minimiert insbesondere die Kosten, den Montageaufwand und reduziert den Aufwand bei potenziell anstehenden Wartungsarbeiten.

In einer besonders bevorzugten Ausführung umfasst die Sensorfunktionseinheit einen von der Antriebseinheit getrennten Sensor, insbesondere einen von der Antriebseinheit getrennten weiteren Sensor. Diese Ausführung ist insbesondere geeignet verschiedene Messgrößen an oder in der Umgebung der motorbetriebenen Förderrolle zu erfassen. Hierdurch lässt sich die Antriebseinheit insbesondere wesentlich präziser ansteuern und ein Förderprozess entlang einer gesamten Förderstrecke realisieren. Ferner ist die Ausführung geeignet - etwa für besonders sicherheitskritische Einsatzbereiche - beispielsweise die Anwesenheit und Abwesenheit eines zu fördernden Förderguts redundant und damit besonders ausfallsicher zu erfassen.

Eine weitere bevorzugte Ausführungsform umfasst eine Analog-Digital-Wandlereinheit, die ausgebildet ist, das Sensorsignal in ein digitales Signal zu wandeln, wobei die Steuerungseinheit die Analog-Digital-Wandlereinheit umfasst, und/oder die Sensorfunktionseinheit die Analog-Digital-Wandlereinheit umfasst.

Gemäß dieser bevorzugten Ausführungsform umfasst die Förderanordnung eine Analog-Digital-Wandlereinheit. Die Analog-Digital-Wandlereinheit ist dazu ausgebildet, ein analoges Sensorsignal, beispielsweise eine an der Antriebseinheit anliegende Spannung, einen an der Antriebseinheit anliegenden Strom und/oder ein an der Antriebseinheit anliegendes Magnetfeld zur Weiterverarbeitung in der Steuerungseinheit in ein digitales Signal zu wandeln. Vorzugsweise ist eine Abtastfrequenz mit der die Analog-Digital- Wandlereinheit das Analogsignal abtastet in Abhängigkeit der Frequenz des Sensorsignals einstellbar. Insbesondere ist die Abtastfrequenz in Abhängigkeit eines auszuwählenden vorbestimmten Charakteristikverlaufs, also in Abhängigkeit des Steuersignals einstellbar.

Vorzugsweise setzt die Analog-Digital-Wandlereinheit basierend auf dem Zählverfahren, dem Seriellen Verfahren oder mittels eines Parallel-Umsetzers das analoge Sensorsignal in ein Digitalsignal um. Ein solches digital aufbereitete Sensorsignal ist zur Übertragung in Bussystemen geeignet. Insbesondere ist das Digitalsignal für die rechnergestützte Verarbeitung geeignet. Ferner ermöglicht das in ein Digitalsignal gewandelte Sensorsignal in vorteilhafter Weise ein gegenüber Umwelteinflüssen, insbesondere Störsignalen, zuverlässigeres Ansteuern der Antriebseinheit und stellt somit einen zuverlässigeren Förderprozess sicher.

Ferner ist es bevorzugt, dass die Steuerungseinheit zur Übertragung des Sensorsignals mit der Sensorfunktionseinheit mit einer Signalleitung direkt verbunden ist, und/oder zur Ansteuerung der Antriebseinheit mit dieser über eine Steuerungsleitung verbunden ist, und/oder zum Empfangen der Steuerungssignale und/oder zum Senden von Betriebsdaten der Förderanordnung mit einer Busleitung verbunden ist.

Gemäß dieser bevorzugten Ausführungsform ist die Steuerungseinheit mit der Sensorfunktionseinheit und die Steuerungseinheit mit der Antriebseinheit über Signalleitungen miteinander verbunden. Vorzugsweise sind die Signalleitungen zur Übertragung von Digitalsignalen ausgebildet.

Die Steuerungseinheit ist insbesondere dazu ausgebildet, Betriebsdaten zu erzeugen und über die Busleitung zu senden. Diese Verarbeitung der Betriebsdaten ermöglicht eine Signalisierung des Betriebszustands der motorbetriebenen Förderrolle, sodass andere in die Förderung eingebundene Komponenten, etwa weitere Förderanordnungen, ihr Steuerungsverhalten unter Verwendung dieser Betriebsdaten definieren können. Der Datenaustausch von Betriebsdaten, bei dem ein Betriebszustand der einen motorbetriebenen Förderrolle zu einem Betriebszustand einer weiteren motorbetriebenen Förderrolle werden kann, ermöglicht dadurch in einem Fördersystem eine Steuerung der einzelnen motorbetriebenen Förderrollen mit vollständig umgesetzter Steuerungsintelligenz, ohne dass hierzu eine zentrale oder dezentrale Steuerungseinheit außerhalb der motorbetriebenen Förderrolle notwendig wäre.

Die Betriebsdaten können auch Daten sein, welche von einer benachbart zu der motorbetriebenen Förderrolle angeordneten motorgetriebenen Förderrolle stammen und den Betriebszustand dieser benachbarten motorgetriebenen Förderrolle signalisiert. So kann die Steuerungseinheit dazu ausgebildet sein, Betriebsdaten einer in Förderrichtung vorgelagerten und/oder nachgelagerten motorgetriebenen Förderrolle zu empfangen, also signalisieren, ob diese benachbarten motorbetriebenen Förderrollen angetrieben sind oder stillstehen. Vorzugsweise weisen die Betriebsdaten der jeweiligen Förderanordnung dazu eine vorbestimmte identische Datenstruktur auf.

Weiter ist noch bevorzugt, dass die Förderanordnung eine Energieschnittstelle, um eine Energieversorgung in Form einer Spannungsversorgung mit einer Spannung zu empfangen, umfasst.

Bevorzugt ist die Energieschnittstelle für eine Spannungsversorgung mit einer Spannung von 24 V, insbesondere von 48 V ausgebildet. Insbesondere ist die Energieschnittstelle für eine Spannungsversorgung für die Steuerungseinheit und/oder die Antriebseinheit und/oder die Sensorfunktionseinheit ausgebildet. Vorzugsweise umfasst die Förderanordnung eine einzige Energieschnittstelle. Ferner kann die Förderanordnung zwei oder mehrere Energieschnittstellen aufweisen.

Ferner ist es bevorzugt, dass die Antriebseinheit einen bürstenlosen Elektromotor umfasst und die Steuerungseinheit eine Kommutierungselektronik zur Ansteuerung des Elektromotors umfasst.

Grundsätzlich ist es folglich bevorzugt, dass die Steuerungseinheit auch zur elektronischen Kommutierung des Elektromotors in der Antriebseinheit ausgebildet ist. Hierdurch wird vermieden, dass eine außerhalb der motorbetriebenen Förderrolle liegende elektronische Kommutierung erfolgt und eine entsprechende große Anzahl an differenzierten Signalen über differenzierte Signalleitungen in den Rollenkörper hineingeführt werden muss. Stattdessen kann die räumlich häufig begrenzte Einführung von Signalen in den Rollenkörper über wenige Signalleitungen erfolgen und daher entsprechend robust und kompakt ausgebildet werden.

Noch weiter ist es bevorzugt, dass die Steuerungseinheit eine Speichereinheit aufweist, in der eine oder mehrere Charakteristika und/oder eine oder mehrere Charakteristikverläufe gespeichert sind, wobei jedem Charakteristikverlauf eine individuelle binäre Kodierung zugeordnet ist, und die Steuerungseinheit ausgebildet ist, um ein empfangenes Sensorsignal mit den individuellen binären Kodierungen zu vergleichen und die Antriebseinheit mit einem Charakteristikverlauf anzusteuern, dem eine individuelle Kodierung zugeordnet ist, die dem empfangenen Sensorsignal entspricht.

Gemäß dieser Ausführungsform weist die Steuerungseinheit eine Speichereinheit als elektronischen Speicher auf, der eine oder eine Mehrzahl von Charakteristika oder Charakteristikverläufen speichert. Diese Charakteristikverläufe beschreiben ein bestimmtes Antriebsverhalten der motorbetriebenen Förderrolle, beispielsweise eine Beschleunigung oder ein Abbremsen, eine Maximalgeschwindigkeit oder entsprechende Verläufe und können folglich allgemein den Verlauf der Geschwindigkeit der motorbetriebenen Förderrolle über die Zeit beschreiben. Als Charakteristikverlauf ist aber auch ein Logikverhalten der motorbetriebenen Förderrolle zu verstehen, welches beispielsweise eine bestimmte Charakteristik in Abhängigkeit eines Sensorsignals und/oder Betriebsdaten bereitstellt, folglich also eine logische Programmierung der motorbetriebenen Förderrolle wiedergibt. So kann beispielsweise eine Programmierung zum Betrieb der motorbetriebenen Förderrolle im Einzelplatzabzug oder im Blockabzug als ein Charakteristikverlauf gespeichert sein. Grundsätzlich können in der Speichereinheit mehrere Charakteristikverläufe gespeichert sein, um durch entsprechenden Abruf mittels Abgleich eines Sensorsignals mit der individuellen binären Kodierung ausgewählt zu werden und dann für den Betrieb der motorbetriebenen Förderrolle herangezogen zu werden. Die Speichereinheit kann aber auch so ausgebildet sein, dass im Rahmen einer Programmierung ein einziger Charakteristikverlauf dort gespeichert wird und dieser einzige Charakteristikverlauf für den Betrieb der motorbetriebenen Förderrolle verwendet wird.

Gemäß einer weiteren bevorzugten Ausführungsform ist vorgesehen, dass die Steuerungseinheit ausgebildet ist, um ein Bus-kodiertes Programmiersignal zu empfangen und um mittels des Programmiersignals eine logische Abhängigkeit zwischen einem Sensorsignal und einer Charakteristik, und/oder eine logische Abhängigkeit zwischen einem Sensorsignal und einem Charakteristikverlauf, und/oder einen Charakteristikverlauf in einer Speichereinheit abzuspeichern.

Gemäß dieser Ausführungsform wird durch ein von der Steuerungseinheit empfangenes Programmiersignal, das durch eine Steuerungsablaufzuordnung oder durch eine Programmierbefehlfolge charakterisiert sein kann, ein entsprechender Steuerungsablauf für die Förderrolle implementiert. Diese Implementierung kann durch konkrete Programmierung anhand der Programmierbefehlfolge stattfinden oder kann erfolgen, indem aufgrund der Steuerungsablaufzuordnung ein vorprogrammierter, in dem Speicher abgespeicherter Steuerungsablauf aufgerufen und zugeordnet wird. Der Steuerungsablauf selbst kann durch eine logische Abhängigkeit zwischen einem Sensorsignal und einem Charakteristikverlauf gebildet sein, hierbei sind natürlich auch weitergehende Abhängigkeiten, beispielsweise von weiteren Sensorsignalen von in Förderrichtung vor- oder nachgelagerten Antriebseinheiten, als abzuspeichernder Steuerungsablauf denkbar. Ebenso können entsprechende Verläufe von Antriebscharakteristiken logisch in Abhängigkeit zu einem Sensorsignal oder auch zu einem Sensorsignalverlauf abgespeichert und der Steuerung zugrunde gelegt werden. Schließlich kann ein Programmiersignal auch dazu dienen um nur eine Charakteristik eines Charakteristikverlaufs abzuspeichern, der dann durch entsprechende logische Verknüpfungen für einen Steuerungsablauf der Förderrolle eingesetzt wird, beispielsweise also durch weitere logische Abhängigkeiten in eine Steuerungsfolge in Abhängigkeit eines Sensorsignals gesetzt wird.

Besonders bevorzugt ist es hierbei, wenn die Programmieranweisung Bus-kodiert ist. Dies ermöglicht es einerseits, die Programmieranweisung über eine Busleitung zu versenden, andererseits wird hierdurch die gezielte Programmierung bestimmter Förderrollen, die an die Busleitung angeschlossen sind, ermöglicht.

Gemäß einer weiteren bevorzugten Ausführungsform ist vorgesehen, dass die Steuerungseinheit ausgebildet ist, in Abhängigkeit eines Sensorsignals und/oder eines Steuerungssignals, die Antriebseinheit zwischen einem Bereitschaftsbetrieb und einem Förderbetrieb hin und her zuschalten.

Im Förderbetrieb ist vorzugsweise vorgesehen, dass die Steuerungseinheit die Antriebseinheit in Abhängigkeit des ausgewählten Charakteristikverlaufs solcherart ansteuert, dass die motorbetriebene Förderrolle mit einer im Wesentlichen konstanten Geschwindigkeit, und/oder mit einer von einer Ist-Geschwindigkeit auf eine Soll- Geschwindigkeit zunehmenden Geschwindigkeit, oder mit einer von einer Ist- Geschwindigkeit auf eine Soll-Geschwindigkeit abnehmenden Geschwindigkeit dreht. Im Bereitschaftsbetrieb wird die Antriebseinheit der motorbetriebenen Förderrolle vorzugsweise nicht angetrieben. Im Bereitschaftsbetrieb ist aber bevorzugt vorgesehen, dass die Steuerungseinheit in Abhängigkeit eines Sensorsignals die Antriebseinheit zum Antrieb der motorbetriebenen Förderrolle unmittelbar ansteuern kann. Insbesondere ist die Antriebseinheit im Bereitschaftsbetrieb nicht vollständig heruntergefahren.

Ferner ist es bevorzugt, dass die Antriebseinheit von dem Bereitschaftsbetrieb in den Förderbetrieb schaltet, falls das Sensorsignal in Förderrichtung einen Wechsel von einem freien Raum zu einem belegten Raum oder von einem belegten Raum zu einem freien Raum signalisiert, und/oder die Antriebseinheit von dem Förderbetrieb in den Bereitschaftsbetrieb schaltet, falls das Sensorsignal in Förderrichtung einen Wechsel von einem freien Raum zu einem belegten Raum oder von einem belegten Raum zu einem freien Raum signalisiert.

Ferner ist noch eine Ausführungsform bevorzugt, umfassend eine Förderrolle und einen Riementrieb, wobei zum Antreiben der Förderrolle die motorbetriebene Förderrolle mit der Förderrolle mittels dem Riementrieb verbunden ist.

Gemäß dieser bevorzugten Ausführungsform ist vorgesehen, dass die motorbetriebene Förderrolle die Förderrollen mit dem Riementrieb antreibt. Der Riementrieb ist beispielsweise ein Keilriemen, ein Keilrippenriemen oder ein Rundriemen. Insbesondere ist vorgesehen, dass die Sensorfunktionseinheit ausgebildet ist, eine Drehbewegung der durch den Riementrieb mit der motorbetriebenen Förderrolle passiv angetriebenen Förderrollen zu erfassen. Vorzugsweise kann die Drehbewegung einer passiv angetriebenen Förderrolle einem Sensorsignal entsprechen, in dessen Abhängigkeit die Antriebseinheit angesteuert wird.

Gemäß einem weiteren Aspekt der Erfindung wird die Aufgabe durch eine Fördervorrichtung der eingangs beschriebenen Art gelöst, umfassend eine oder mehrere Förderanordnungen nach einer der zuvor beschriebenen Ausführungsformen einer Förderanordnung.

Nach einem dritten Aspekt der Erfindung wird die Aufgabe durch eine motorbetriebene Förderrolle der eingangs beschriebenen Art gelöst, umfassend einen drehbar um eine Rollenachse gelagerten Rollenkörper, eine innerhalb des Rollenkörpers angeordnete Antriebseinheit, die mit dem Rollenkörper und einem Achselement mechanisch gekoppelt und ausgebildet ist, um ein Drehmoment zwischen dem Achselement und dem Rollenkörper zu erzeugen, eine innerhalb des Rollenkörpers angeordnete Steuerungseinheit, die ausgebildet ist, um ein Steuerungssignal zu empfangen und in Abhängigkeit des Steuerungssignals die Antriebseinheit zum Antrieb mit einer durch das Steuerungssignal vorbestimmten Charakteristik anzusteuern, eine innerhalb des Rollenkörpers angeordnete Sensorfunktionseinheit, wobei die Steuerungseinheit ausgebildet ist, um ein Sensorsignal der Sensorfunktionseinheit über eine Signalleitung zu empfangen, und wobei die Steuerungseinheit eine Analog-Digital-Wandlereinheit umfasst, um das über die Signalleitung empfangene Sensorsignal in ein digitales Signal zu wandeln und das in ein digitales Signal gewandelte Sensorsignal vorzugsweise über eine Busleitung aus dem Rollenkörper heraus zu senden.

Gemäß einem vierten Aspekt der Erfindung wird die Aufgabe durch ein Verfahren der eingangs beschriebenen Art gelöst, umfassend die Schritte, Bereitstellen einer Fördervorrichtung gemäß einer zuvor beschriebenen Ausführungsform, und/oder Erfassen eines zu fördernden Förderguts, und/oder Schalten von einer oder mehreren Förderanordnungen von einem Bereitschaftsbetrieb in einen Förderbetrieb, und/oder Fördern des Förderguts.

Gemäß einer ersten bevorzugten Ausführungsform ist vorgesehen, dass das Fördern das Fördern im Einzelplatzabzugsmodus oder das Fördern im Blockabzugsmodus umfasst.

Noch weiter ist es bevorzugt, dass das Fördern des zu fördernden Förderguts in Abhängigkeit des ausgewählten Charakteristikverlaufs das Fördern mit einer im Wesentlichen konstanten Geschwindigkeit, und/oder mit einer von einer Ist- Geschwindigkeit auf eine Soll-Geschwindigkeit zunehmenden Geschwindigkeit, und/oder mit einer von einer Ist-Geschwindigkeit auf eine Soll-Geschwindigkeit abnehmenden Geschwindigkeit umfasst.

Das erfindungsgemäße Verfahren kann insbesondere mit der zuvor erläuterten Förderanordnung ausgeführt werden. Weiterhin ist zu verstehen, dass das erfindungsgemäße Verfahren insbesondere solcher Art bevorzugt fortgebildet werden kann, dass es diejenigen Verfahrensschritte aufweist bzw. ermöglicht, die zuvor erläuterte Fortbildungen der erfindungsgemäßen Steuerungsvorrichtung bereitstellt.

Zu den Vorteilen, Ausführungsvarianten und Ausführungsdetails dieser weiteren Aspekte und ihrer möglichen Fortbildungen wird auf die vorangegangene Beschreibung zu den entsprechenden Merkmalen der Förderanordnung zum Fördern eines Förderguts verwiesen.

Bevorzugte Ausführungsformen der Erfindung werden beispielhaft anhand der beiliegenden Figuren erläutert. In den Figuren sind gleiche oder im Wesentlichen funktionsgleiche bzw. ähnliche Elemente mit den gleichen Bezugszeichen bezeichnet. Es zeigen:
- Figur 1: eine längsgeschnittene Ansicht eines bevorzugten Ausführungsbeispiels der erfindungsgemäßen Förderanordnung,
- Figur 2: eine längsgeschnittene Ansicht eines bevorzugten Ausführungsbeispiels der erfindungsgemäßen Förderanordnung,
- Figur 3: eine schematische Draufsicht eines weiteren bevorzugten Ausführungsbeispiels der erfindungsgemäßen Förderanordnung, und
- Figur 4: eine schematische Draufsicht einer erfindungsgemäßen Fördervorrichtung.

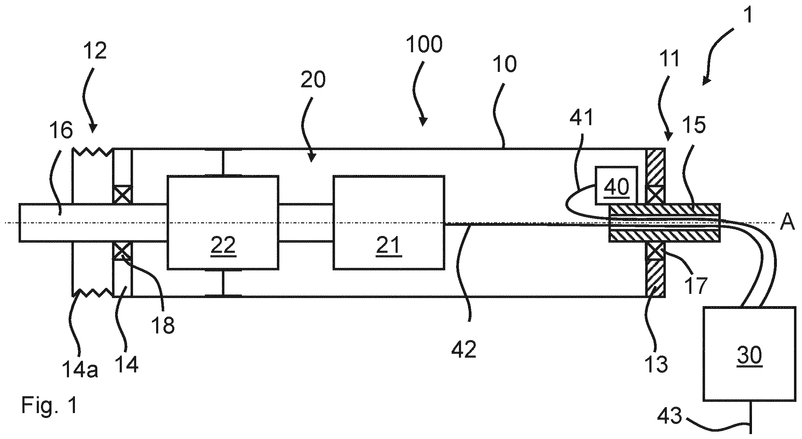

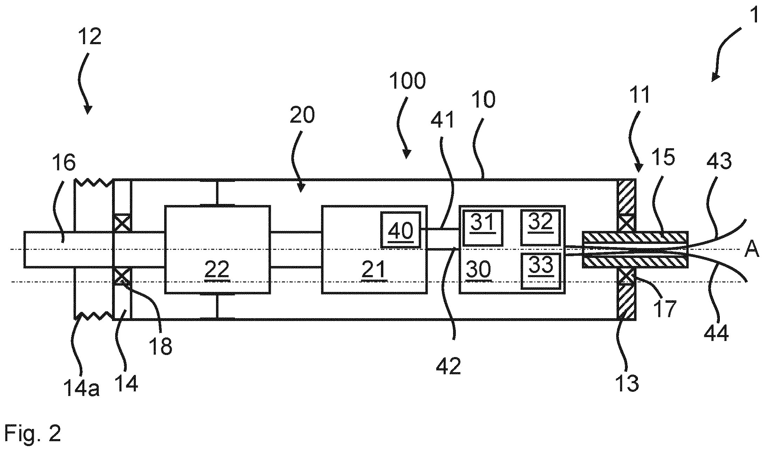

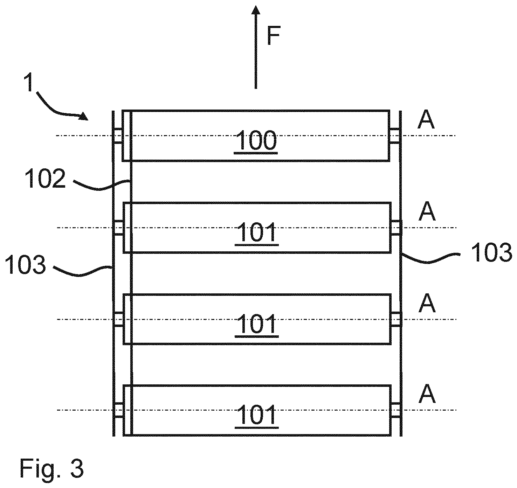

Bezugnehmend auf die Figuren 1 und 2 ist eine Förderanordnung 1 mit einer motorbetriebenen Förderrolle 100 gezeigt, die einen Rollenkörper 10 aufweist, aus dem jeweils endseitig ein erstes Achselement 15 und ein zweites Achselement 16 herausragt. Die motorbetriebene Förderrolle kann mittels dieser Achselemente in einem Rahmen 103 (siehe Figur 3) montiert werden, der sich entlang einer Förderstrecke erstreckt. Hierbei werden die beiden Achselemente 15, 16 drehmomentfest in dem Rahmen 103 montiert. Der Rollenkörper 10 ist drehbar um diese Achselemente 15, 16 gelagert.

Diese drehbare Lagerung ist verwirklicht durch ein erstes Wälzlager 17, das in einer am ersten Ende 11 des Rollenkörpers eingesetzten Endkappe 13 befestigt ist und den Rollenkörper 10 drehbar auf dem ersten Achselement 15 lagert. Weiterhin ist am zweiten Ende 12 des Rollenkörpers eine Endkappe 14 eingesetzt, in der ein zweites Wälzlager 18 montiert ist, welches den Rollenkörper 10 drehbar auf dem zweiten Achselement 16 lagert. Die zweite Endkappe 14 weist dabei zusätzlich einstückig eine aus dem Rollenkörper axial vorstehende Umfangsfläche auf, die durch mehrere umlaufende Nuten 14a einen Abtrieb eines Drehmoments mittels eines Keilrippenriemens 102 auf andere, benachbart liegende Förderrollen 101 ermöglicht, die über keinen eigenen Motorantrieb verfügen. Hierdurch kann die motorbetriebene Förderrolle 100 in einer Förderzone mit mehreren passiv angetriebenen Rollen 101 eingesetzt werden und dient zum Antrieb dieser passiv angetriebenen Förderrollen 101 in der Förderzone. In dem vorliegenden Ausführungsbeispiel ist eine Förderanordnung 1 eine Förderzone.

Im Innenraum des Rollenkörpers 10 ist weiterhin eine Antriebseinheit 20 angeordnet, die ein Drehmoment zwischen einem der beiden oder beiden Achselementen 15, 16 und dem Rollenkörper 10 erzeugen kann. Die Achse, auf welcher der Rollenkörper 10 drehbar gelagert ist, wird bei der gezeigten Ausführungsform durch die zwei Achselemente 15, 16 gebildet, die als Achsstummel ausgebildet sind. Alternativ könnte auch eine durchgehende Achse, die sich durch den Rollenkörper erstreckt, vorgesehen sein. Die Antriebseinheit 20 kann einen Elektromotor 21 umfassen, der direkt das Drehmoment erzeugt und folglich mit dem Stator mit einem oder beiden Achselementen 15, 16 drehmomentfest gekoppelt ist und mit dem Rotor mit dem Rollenkörper 10 drehmomentfest gekoppelt ist. Die Antriebseinheit 20 kann weiterhin auch ein Getriebe 22 umfassen, um die Rotationsgeschwindigkeit des Elektromotors 21 zu untersetzen und dessen Drehmoment zu erhöhen. So können beispielsweise Planetenradgetriebe oder Stirnradgetriebe zum Einsatz kommen und in die Drehmomentübertragungskette zwischen dem Achsstummel oder den Achselementen 15, 16 und dem Rollenkörper 10 mit dem Elektromotor 21 gemeinsam eingesetzt sein.

Die Antriebseinheit 20 wird durch eine Steuerungseinheit 30 in Abhängigkeit einer Sensorfunktionseinheit 40 angesteuert. Diese Steuerungseinheit 30 kann im Falle eines bürstenlosen Elektromotors 21 eine Kommutierungselektronik aufweisen. Insbesondere ist die Steuerungseinheit 30 aber dazu ausgebildet, um logische Steuerungsentscheidungen auf Grundlage eines empfangenen Sensorsignals und ggf. in Abhängigkeit von Betriebsdaten zu treffen. Eine solche Steuerungseinheit 30 kann einerseits, wie in dem in Figur 1 gezeigten Ausführungsbeispiel, außerhalb des Rollenkörpers 10 und andererseits, wie in dem in Figur 2 gezeigten Ausführungsbeispiel, innerhalb des Rollenkörpers 10 angeordnet sein. Wie aus Figur 1 ersichtlich, werden von der außerhalb liegenden Steuerungseinheit 30 eine Signalleitung 41 zu einer Sensorfunktionseinheit 40, die innerhalb des Rollenkörpers liegt, durch eine Längsbohrung in dem Achselement 15 geführt. Weiterhin wird eine Leitung 42 durch das Achselement 15 zu dem Elektromotor 21 geführt, die den Elektromotor mit Energie versorgt und ansteuert. Grundsätzlich können diese Leitungen 41, 42 als analoge Signalleitungen ausgebildet sein und entsprechend analoge Signale von der Steuerungseinheit zum Elektromotor und vom Sensor zu der Steuerungseinheit - und umgekehrt - übertragen. Alternativ kann auch die Signalübertragung zwischen Steuerungseinheit und Sensor bzw. Elektromotor als digitales Signal und insbesondere als Bussignal erfolgen, was dann entsprechende Dekodierungsschaltungen am Sensor und Elektromotor innerhalb des Rollenkörpers voraussetzt.

Die im Ausführungsbeispiel der Figur 2 gezeigte Steuerungseinheit 30 umfasst eine Speichereinheit 32. In der Speichereinheit 32 können unveränderliche Kennwerte der motorbetriebenen Förderrolle 100, wie deren Seriennummer oder die Untersetzung deren Getriebes gespeichert sein und für eine Datenübertragung zu weiteren motorbetriebenen Förderrollen oder einer weiteren, etwa übergeordneten Steuerungseinheit dienen. Ferner können von der Sensorfunktionseinheit 40 bereitgestellte Sensorsignale gespeichert sein. Weiterhin können in der Speichereinheit 32 veränderliche Betriebsdaten der motorbetriebenen Förderrolle 100 abgespeichert sein, wie deren Betriebsstundenzahl, Kennwerte zur Charakterisierung von Betriebstemperaturen wie erreichte Maximaltemperatur, ebenso Kennwerte zur Charakterisierung von Rotationsgeschwindigkeiten, Drehmomenten und dergleichen. Diese gespeicherten Daten können dazu dienen, aus dem Rollenkörper herausgesendet zu werden, um einem außerhalb des Rollenkörpers liegenden Signalempfänger, beispielsweise einer Steuerungseinheit einer weiteren Förderanordnung, Kenndaten über die motorbetriebene Förderrolle zu übermitteln.

Weiterhin können in der Speichereinheit 32 in Abhängigkeit eines Charakteristikverlaufs ein oder mehrere Steuerungsabläufe abgespeichert sein, nach denen die Steuerungseinheit die Antriebseinheit 20 ansteuert in Abhängigkeit und nach logischer Verknüpfung von Sensordaten der Sensorfunktionseinheit 40 und ggf. Betriebsdaten einer motorbetriebenen Förderrolle 100. So kann beispielsweise ein Steuerungsablauf für einen Einzelplatzabzug abgespeichert sein, ein Steuerungsablauf für einen Blockabzug abspeichert sein oder es können diese beiden Arten von Steuerungsabläufen mit unterschiedlichen Charakteristika, wie etwa Fördergeschwindigkeiten, Beschleunigungsrampen, Antriebsdrehmomentverlauf und dergleichen abgespeichert sein. Diese unterschiedlichen Steuerungsabläufe sind entweder von außen durch entsprechende Datenzufuhr in die Steuerungseinheit 30 programmierbar und die Steuerungseinheit entsprechend für eine Programmierung ausgebildet ein entsprechendes Programmiersignal zu empfangen. Insbesondere lassen sich mittels des Programmiersignals eine logische Abhängigkeit zwischen einem Sensorsignal und einer Charakteristik, eine logische Abhängigkeit zwischen einem Sensorsignal und einem Charakteristikverlauf und auch einem Steuerungsablauf, programmieren und in einer Speichereinheit 32 abspeichern. Alternativ kann der Charakteristikverlauf auch in der Speichereinheit 32 abgespeichert sein und durch einen Empfang eines entsprechenden Sensorsignals aus der Speichereinheit 32 durch die Steuerungseinheit 30 ausgelesen und dann für die Steuerungsabläufe der Antriebseinheit 20 verwendet werden. In diesem Fall ist jedem Steuerungsablauf ein entsprechendes Sensorsignal zugeordnet und die Steuerungseinheit 30 ausgebildet, um einen entsprechenden Vergleich anzustellen. Zur logischen Datenverarbeitung und Ablaufsteuerung umfasst die Steuerungseinheit eine Datenverarbeitungseinheit (CPU) 33 mit Kommutierungselektronik für den bürstenlosen Elektromotor 21.

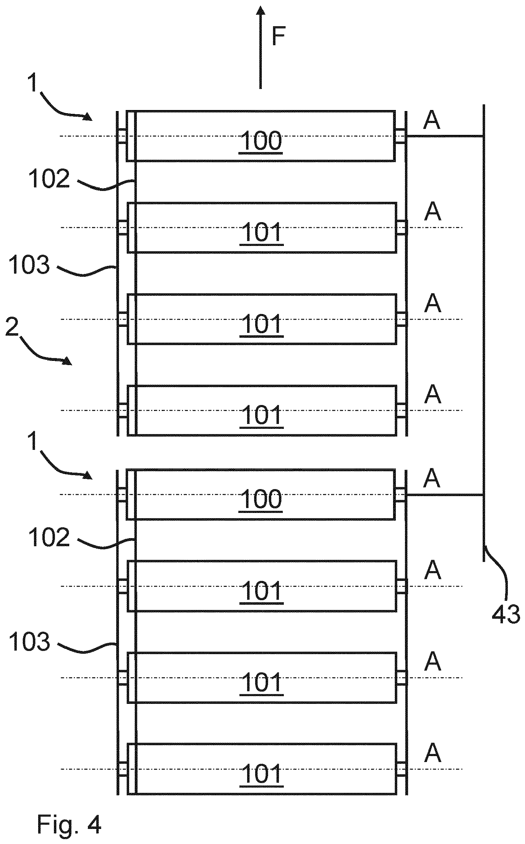

Zu diesem Zweck ist die Steuerungseinheit 30 mittels einer Busleitung 43 mit einer oder mehreren weiteren Förderanordnungen verbunden, wie in Figur 4 gezeigt. Die Busleitung 43 ist hierzu durch das erste Achselement 15 hindurchgeführt, der als Hohlachse ausgeführt ist. Weiterhin wird durch die Hohlachse hindurch eine Energieleitung 44 angeordnet, welche eine elektrische Energieübertragung für die Antriebseinheit 20, die Steuerungseinheit 30 und die Sensorfunktionseinheit 40 bereitstellt. Der Elektromotor 21 ist mittels einer Leitung 42 mit der Steuerungseinheit verbunden, die Sensorfunktionseinheit 40 ist mittels einer Signalleitung 41 mit der Steuerungseinheit verbunden, diese Leitung bzw. Signalleitung können zur analogen, oder digitalen Übertragung ausgebildet sein.

Insbesondere umfasst die Sensorfunktionseinheit 40 einen Sensor zum Erfassen der Anwesenheit und Abwesenheit eines zu fördernden Förderguts. Der Sensor des in dem in Figur 1 gezeigten Ausführungsbeispiels erfasst beispielsweise die Anwesenheit des zu fördernde Förderguts durch eine Gewichtsänderung, sobald das Fördergut mit der motorbetriebenen Förderrolle 100 in Eingriff kommt. Die Steuerungseinheit steuert dann die Antriebseinheit in Abhängigkeit dieses Sensorsignals und in Abhängigkeit eines auszuwählenden vorbestimmten Charakteristikverlaufs an, beispielsweise mit einem bestimmten Antriebsdrehmomentverlauf auf eine bestimmte Fördergeschwindigkeit. Im in Figur 2 gezeigten Ausführungsbeispiel ist der Elektromotor 21 selbst die Sensorfunktionseinheit 40. In diesem bevorzugten Ausführungsbeispiel ist das Sensorsignal eine Magnetfeldstärke des Elektromotors 21. Indem das Fördergut mit der motorbetriebenen Förderrolle 100 in Eingriff kommt, dreht der Rollenkörper 10 samt Rotor relativ zum Stator des Elektromotors 21 und führt so zu einem sich ändernden Sensorsignal. In dem in Figur 2 gezeigten Ausführungsbeispiel wandelt eine in der Steuerungseinheit integrierte Analog-Digital-Wandlereinheit 31 das analoge Sensorsignal zum Ansteuern der Antriebseinheit in ein Digitalsignal um.

Ferner kann die Sensorfunktionseinheit 40 einen weiteren Sensor, etwa einen Temperatursensor umfassen, welcher ausgebildet ist, um die in dem Rollenkörper vorherrschende Temperatur zu erfassen und an die Steuerungseinheit zu signalisieren. Der Temperatursensor dient beispielsweise dazu, eine Überlastung der Rolle zu detektieren und der Steuerungseinheit eine entsprechend logische Reaktion mit Ausgabe entsprechender Steuerungssignale an die Antriebseinheit, auf Grundlage von Temperaturdaten zu ermöglichen.

Figur 3 zeigt ein weiteres Ausführungsbeispiel einer Förderanordnung basierend auf der in Figur 2 gezeigten Förderanordnung. Dazu bilden drei passive angetriebene Förderrollen 101, als nicht motorbetriebene Förderrollen, mit einer motorbetriebenen Förderrolle 100 eine Förderzone. Die passiv angetriebenen Förderrollen 101 sind wie die motorbetriebene Förderrolle 100 in einem Rahmen 103 drehbar gelagert. Die motorbetriebene Förderrolle 100 treibt mit einem Keilrippenriemen 102 die passiv angetriebenen Förderrollen 101 an. Durch Ansteuerung einer einzelnen motorbetriebenen Förderrolle 100 können daher die insgesamt jeweils drei Förderrollen 101 in der jeweiligen Förderzone insgesamt in Rotation versetzt werden. Durch diese Anordnung ist in jeder Förderzone wenigstens eine Sensorfunktionseinheit vorgesehen, welche das Vorhandensein eines zu fördernden Förderguts in der jeweiligen Förderzone erfassen kann.

Ferner können die passiv angetriebenen Förderrollen 101 ein Sensorsignal zum Ansteuern der Antriebseinheit 20 signalisieren. Tritt die in Förderrichtung F erste Förderrolle 101 in Eingriff mit einem zu fördernden Fördergut führt dies zu einer Rotation dieser Förderrolle 101. Der Riementrieb 102 überträgt diese Drehbewegung auf die motorbetriebene Förderrolle, die ein Drehzahlsensor erfassen kann und die Steuerungseinheit die Antriebseinheit entsprechend ansteuern kann.

Figur 4 zeigt schließlich ein bevorzugtes Ausführungsbeispiel einer Fördervorrichtung 2, umfassend zwei in Förderrichtung F hintereinander angeordnete Förderanordnungen 1 gemäß dem in Figur 3 gezeigten Ausführungsbeispiel.

### Bezugszeichenliste

- 1: Förderanordnung
- 2: Fördervorrichtung
- 10: Rollenkörper
- 11: erstes Ende des Rollenkörpers
- 12: zweites Ende des Rollenkörpers
- 13: Endkappe
- 14: Endkappe
- 14a: umlaufende Nuten
- 15: Achselement, Achsstummel
- 16: Achselement
- 17: Wälzlager
- 18: Wälzlager
- 20: Antriebseinheit
- 21: Elektromotor
- 22: Getriebe
- 30: Steuerungseinheit
- 31: Analog-Digital-Wandlereinheit
- 32: Speichereinheit
- 33: CPU, Kommutierungselektronik
- 40: Sensorfunktionseinheit
- 41: Signalleitung
- 42: Steuerungsleitung
- 43: Busleitung
- 44: Energieleitung
- 100: motorbetriebene Förderrolle
- 101: passiv angetriebene Förderrolle
- 102: Keilrippenriemen
- 103: Rahmen

- A: Rollenachse
- F: Förderrichtung

## Patentansprüche

1. Förderanordnung (1) zum Fördern eines Förderguts, umfassend
- eine motorbetriebene Förderrolle (100), umfassend
• einen drehbar um eine Rollenachse (A) gelagerten Rollenkörper (10),
• eine innerhalb des Rollenkörpers (10) angeordnete Antriebseinheit (20), die mit dem Rollenkörper (10) und einem Achselement (16) mechanisch gekoppelt und ausgebildet ist, um ein Drehmoment zwischen dem Achselement (16) und dem Rollenkörper (10) zu erzeugen;
- eine innerhalb des Rollenkörpers (10) angeordnete Sensorfunktionseinheit (40), und
- eine Steuerungseinheit (30), die zur Übertragung von Signalen mit der Sensorfunktionseinheit (40) verbunden ist, wobei das Steuerungssignal Daten zum Antrieb der motorbetriebenen Förderrolle mit einem durch das Steuerungssignal vorbestimmten Charakteristikverlauf in einem Förderbetrieb enthält;
wobei die innerhalb des Rollenkörpers (10) angeordnete Sensorfunktionseinheit (40) ausgebildet ist, um ein mit der motorbetriebenen Förderrolle (100) zu förderndes Fördergut zu erfassen,
wobei die Steuerungseinheit (30) ausgebildet ist, um ein Sensorsignal von der innerhalb des Rollenkörpers (10) angeordneten Sensorfunktionseinheit zu empfangen und in Abhängigkeit des Sensorsignals ein Steuerungssignal an die Antriebseinheit (20) zu senden,
**dadurch gekennzeichnet**,
- dass die innerhalb des Rollenkörpers (10) angeordnete Sensorfunktionseinheit (40) ausgebildet ist, das Sensorsignal als binäres Signal zu erzeugen, welches die Anwesenheit und Abwesenheit des Förderguts signalisiert,
- dass die Steuerungseinheit (30) ausgebildet ist, in Abhängigkeit des von der innerhalb des Rollenkörpers (10) angeordneten Sensorfunktionseinheit (40) erzeugte Sensorsignals, die Antriebseinheit (20) zwischen einem Bereitschaftsbetrieb und einem Förderbetrieb hin und her zu schalten.

2. Förderanordnung (1) nach Anspruch 1,
**dadurch gekennzeichnet,**
**dass** die Steuerungseinheit (30) innerhalb des Rollenkörpers (10) angeordnet ist.

3. Förderanordnung (1) nach einem der vorherigen Ansprüche 1-2, **dadurch gekennzeichnet, dass** die Sensorfunktionseinheit (40) zusätzlich ein Analogsignal als Sensorsignal bereitstellt.

4. Förderanordnung (1) nach einem der vorherigen Ansprüche 1-3,
**dadurch gekennzeichnet,**
- **dass** die Antriebseinheit (20) die Sensorfunktionseinheit (40) umfasst oder ist,
und/oder,
- die Sensorfunktionseinheit (40) einen von der Antriebseinheit getrennten Sensor umfasst oder ist.

5. Förderanordnung (1) nach einem der vorherigen Ansprüche 1-4, umfassend eine Analog-Digital-Wandlereinheit (31), die ausgebildet ist, das Sensorsignal in ein digitales Signal zu wandeln, wobei
- die Steuerungseinheit (30) die Analog-Digital-Wandlereinheit (31) umfasst, und/oder
- die Sensorfunktionseinheit (40) die Analog-Digital-Wandlereinheit (31) umfasst.

6. Förderanordnung (1) nach einem der vorherigen Ansprüche 1-5,
**dadurch gekennzeichnet,**
**dass** die Steuerungseinheit (30)
- zur Übertragung des Sensorsignals mit der Sensorfunktionseinheit (40) mit einer Signalleitung (41) direkt verbunden ist, und/oder
- zur Ansteuerung der Antriebseinheit (20) mit dieser über eine Steuerungsleitung (42) verbunden ist, und/oder
- zum Empfangen der Steuerungssignale und/oder zum Senden von Betriebsdaten der Förderanordnung (1) mit einer Busleitung (43) verbunden ist.

7. Förderanordnung (1) nach einem der vorherigen Ansprüche 1-6, umfassend eine Energieschnittstelle, um eine Energieversorgung in Form einer Spannungsversorgung mit einer Spannung zu empfangen.

8. Förderanordnung (1) nach einem der vorherigen Ansprüche 1-7,
**dadurch gekennzeichnet,**
**dass** die Antriebseinheit (20) einen bürstenlosen Elektromotor (21) umfasst und die Steuerungseinheit (30) eine Kommutierungselektronik zur Ansteuerung des Elektromotors (21) umfasst.

9. Förderanordnung (1) nach einem der vorherigen Ansprüche 1-8,
**dadurch gekennzeichnet,**
**dass** die Steuerungseinheit (30) eine Speichereinheit (32) aufweist, in der eine oder mehrere Charakteristika und/oder ein oder mehrere Charakteristikverläufe gespeichert sind, wobei jedem Charakteristikverlauf eine individuelle binäre Kodierung zugeordnet ist, und die Steuerungseinheit (30) ausgebildet ist, um ein empfangenes Sensorsignal mit den individuellen binären Kodierungen zu vergleichen und die Antriebseinheit (20) mit einem Charakteristikverlauf anzusteuern, dem eine individuelle Kodierung zugeordnet ist, die dem empfangenen Sensorsignal entspricht.

10. Förderanordnung (1) nach einem der vorherigen Ansprüche 1-9,
**dadurch gekennzeichnet,**
**dass** die Steuerungseinheit (30) ausgebildet ist, um ein Buskodiertes Programmiersignal zu empfangen und um mittels des Programmiersignals
- eine logische Abhängigkeit zwischen dem Sensorsignal und einer Charakteristik, und/oder
- eine logische Abhängigkeit zwischen dem Sensorsignal und einem Charakteristikverlauf, und/oder
einen Charakteristikverlauf in einer Speichereinheit abzuspeichern.

11. Förderanordnung (1) nach einem der vorherigen Ansprüche 1-10,
**dadurch gekennzeichnet,**
**dass** die Steuerungseinheit (30) ausgebildet ist, in Abhängigkeit des Sensorsignals und eines Steuerungssignals, die Antriebseinheit (20) zwischen einem Bereitschaftsbetrieb und einem Förderbetrieb hin und her zu schalten.

12. Förderanordnung (1) nach einem der vorherigen Ansprüche 1-11,
**dadurch gekennzeichnet, dass**
- die Antriebseinheit (20) von dem Bereitschaftsbetrieb in den Förderbetrieb schaltet, falls das Sensorsignal in Förderrichtung (F) einen Wechsel von einem freien Raum zu einem belegten Raum oder von einem belegten Raum zu einem freien Raum signalisiert, und/oder
- die Antriebseinheit (20) von dem Förderbetrieb in den Bereitschaftsbetrieb schaltet, falls das Sensorsignal in Förderrichtung (F) einen Wechsel von einem freien Raum zu einem belegten Raum oder von einem belegten Raum zu einem freien Raum signalisiert.

13. Förderanordnung (1) nach einem der vorherigen Ansprüche 1-12, umfassend eine Förderrolle (101) und einen Riementrieb (102), wobei zum Antreiben der Förderrolle (101) die motorbetriebene Förderrolle (100) mit der passiv angetriebenen Förderrolle (101) mittels dem Riementrieb verbunden ist.

14. Fördervorrichtung (2) zum Fördern eines Förderguts, umfassend eine oder mehrere Förderanordnungen (1) nach einem der vorherigen Ansprüche.

## Claims

1. Conveying arrangement (1) for conveying a conveyed material, comprising
- a motor-operated conveying roller (100), comprising
• a roller body (10) mounted rotatably about a roller axis (A),
• a drive unit (20) which is arranged within the roller body (10) and which is mechanically coupled to the roller body (10) and to an axle element (16) and which is designed to generate a torque between the axle element (16) and the roller body (10),
- a sensor function unit (40) which is arranged within the roller body (10) and , and
- a control unit (30) which is connected, for the transmission of signals, to the sensor function unit (40), wherein the control signal comprises data for the drive of the motor-operated conveying roller with a characteristic profile, which is predetermined by the control signal, in a conveying operating mode,
wherein the sensor function unit (40) arranged within the roller body (10) is designed to detect a conveyed material to be conveyed by means of the motor-operated conveying roller (100),
wherein the control unit (30) is designed to receive a sensor signal from the sensor function unit arranged within the roller body (10) and to transmit a control signal to the drive unit (20) in a manner dependent on the sensor signal, **characterized in**
**that** the sensor function unit (40) located within the roller body (10) is designed to generate the sensor signal as a binary signal, which signals the presence and absence of conveyed material,
- **that** the control unit (30) is designed to switch the drive unit (20) back and forth between a standby operating mode and a conveying operating mode depending on the sensor signal generated by the sensor function unit (10) located within the roller body (10).

2. Conveying arrangement (1) according to Claim 1, **characterized in that** the control unit (30) is arranged within the roller body (10).

3. Conveying arrangement (1) according to either of the preceding Claims 1-2, **characterized in that** the sensor function unit (40) additionally provides an analogue signal as sensor signal.

4. Conveying arrangement (1) according to any of the preceding Claims 1-3, **characterized in that**
- the drive unit (20) comprises or is the sensor function unit (40), and/or
- the sensor function unit (40) comprises or is a sensor separate from the drive unit.

5. Conveying arrangement (1) according to any of the preceding Claims 1-4, comprising an analogue-digital converter unit (31) which is designed to convert the sensor signal into a digital signal, wherein
- the control unit (30) comprises the analogue-digital converter unit (31), and/or
- the sensor function unit (40) comprises the analogue-digital converter unit (31).

6. Conveying arrangement (1) according to any of the preceding Claims 1-5, **characterized in that** the control unit (30),
- for transmitting the sensor signal, is connected directly to the sensor function unit (40) by means of a signal line (41), and/or,
- for activating the drive unit (20), is connected to the latter via a control line (42), and/or,
- for receiving the control signals and/or for transmitting operating data of the conveying arrangement (1), is connected to a bus line (43).

7. Conveying arrangement (1) according to any of the preceding Claims 1-6, comprising a power interface for receiving a power supply in the form of a voltage supply with a voltage.

8. Conveying arrangement (1) according to any of the preceding Claims 1-7, **characterized in that** the drive unit (20) comprises a brushless electric motor (21), and the control unit (30) comprises commutation electronics for activating the electric motor (21).

9. Conveying arrangement (1) according to any of the preceding Claims 1-8, **characterized in that** the control unit (30) has a memory unit (32) in which there are stored one or more characteristics and/or one or more characteristic profiles, wherein each characteristic profile is assigned an individual binary coding, and the control unit (30) is designed to compare a received sensor signal with the individual binary codings and to activate the drive unit (20) with a characteristic profile which is assigned an individual coding that corresponds to the received sensor signal.

10. Conveying arrangement (1) according to any of the preceding Claims 1-9, **characterized in that** the control unit (30) is designed to receive a bus-coded programming signal and, by means of the programming signal,
- to store a logical dependency between the sensor signal and a characteristic, and/or
- a logical dependency between the sensor signal and a characteristic profile, and/or
- a characteristic profile, in a memory unit.

11. Conveying arrangement (1) according to any of the preceding Claims 1-10, **characterized in that** the control unit (30) is designed to switch the drive unit (20) back and forth between a standby operating mode and a conveying operating mode in a manner dependent on the sensor signal and a control signal.

12. Conveying arrangement (1) according to any of the preceding Claims 1-11, **characterized in that**
- the drive unit (20) switches from the standby operating mode to the conveying operating mode if the sensor signal signals a change from a free space to an occupied space or from an occupied space to a free space in a conveying direction (F), and/or
- the drive unit (20) switches from the conveying operating mode to the standby operating mode if the sensor signal signals a change from a free space to an occupied space or from an occupied space to a free space in the conveying direction (F).

13. Conveying arrangement (1) according to any of the preceding Claims 1-12, comprising a conveying roller (101) and a belt drive (102), wherein, for the drive of the conveying roller (101), the motor-operated conveying roller (100) is connected to the passively driven conveying roller (101) by means of the belt drive.

14. Conveying device (2) for conveying a conveyed material, comprising one or more conveying arrangements (1) according to any of the preceding claims.

## Revendications

1. Dispositif de transport (1) pour le transport d'un produit à transporter (100), comprenant
- un rouleau transporteur motorisé (100) comprenant
• un corps de rouleau (10) s'appuyant en rotation autour d'un axe de rouleau (A),
• une unité d'entraînement (20) disposée à l'intérieur du corps de rouleau (10) et qui est couplée mécaniquement au corps de rouleau (10) et à un élément d'essieu (16) et qui est conçue pour générer le couple de rotation entre l'élément d'essieu (16) et le corps de rouleau (10) ;
- une unité fonctionnelle de détection (40) disposée à l'intérieur du corps de rouleau (10), et
- une unité de commande (30), qui est connectée à l'unité fonctionnelle de détection (40) pour transmettre des signaux, le signal de détection contenant des données pour l'entraînement du rouleau transporteur motorisé avec une courbe de caractéristiques prédéfinie par le signal de commande en mode transport ;
l'unité fonctionnelle de détection (40) disposée à l'intérieur du corps de rouleau (10) étant conçue pour enregistrer un produit à transporter au moyen du rouleau transporteur motorisé (100),
l'unité de commande (30) étant conçue pour recevoir un signal de détection de l'unité fonctionnelle de détection disposée à l'intérieur du corps de rouleau (10) et pour envoyer un signal de commande à l'unité d'entraînement (20) en fonction du signal de détection,
**caractérisé en ce que**
- l'unité fonctionnelle de détection (40) disposée à l'intérieur du corps de rouleau (40) est conçue pour générer le signal de détection qui signale la présence et l'absence du produit à transporter sous forme de signal binaire,
- l'unité de commande (30) est conçue pour, en fonction du signal de détection généré par l'unité de détection fonctionnelle (40) disposée à l'intérieur du corps de rouleau (10), commuter en alternance l'unité d'entraînement (20) entre un mode disponibilité opérationnelle et un mode transport.

2. Dispositif de transport (1) selon la revendication 1,
**caractérisé en ce que**
l'unité de commande (30) est disposée à l'intérieur du corps de rouleau (10).

3. Dispositif de transport (1) selon une des revendications précédentes 1 à 2, **caractérisé en ce que**
l'unité de détection fonctionnelle (40) fournit en outre un signal analogique en tant que signal de détection.

4. Dispositif de transport (1) selon une des revendications précédentes 1 à 3, **caractérisé en ce que**
- l'unité d'entraînement (20) comprend ou constitue l'unité de détection fonctionnelle (40),
et/ou
- l'unité de détection fonctionnelle (40) comprend ou constitue un capteur séparé de l'unité d'entraînement.

5. Dispositif de transport (1) selon une des revendications précédentes 1 à 4, comprenant une unité de conversion analogique-numérique (31) qui est conçue pour convertir le signal de détection en signal numérique,
- l'unité de commande (30) englobe l'unité de conversion analogique-numérique (31),
et/ou
- l'unité fonctionnelle de détection (40) englobe l'unité de conversion analogique-numérique (31).

6. Dispositif de transport (1) selon une des revendications précédentes 1 à 5, **caractérisé en ce que**
l'unité de commande (30)
- est couplée directement à l'unité fonctionnelle de détection (40) par une ligne de transmission de signaux (41) pour transmettre le signal de détection, et/ou
- pour commander l'unité d'entraînement (20) est connectée à celle-ci par une ligne de commande (42), et/ou
- pour recevoir le signal de commande et/ou pour envoyer des données de fonctionnement du dispositif de transport (1), est couplée à une conduite de bus (43).

7. Dispositif de transport (1) selon une des revendications précédentes 1 à 6, comprenant une interface énergétique permettant de recevoir une alimentation énergétique sous la forme d'une alimentation en tension avec une tension.

8. Dispositif de transport (1) selon une des revendications précédentes 1 à 7, **caractérisé en ce que**
l'unité d'entraînement (20) comprend un moteur électrique sans balais (21) et l'unité de commande (30) comprend un système électronique de commutation pour commander le moteur électrique (21).

9. Dispositif de transport (1) selon une des revendications précédentes 1 à 8, **caractérisé en ce que**
l'unité de commande (30) présente une unité de mémoire (32), dans laquelle une ou plusieurs caractéristiques et/ou une ou plusieurs courbes de caractéristiques sont enregistrées, un codage binaire individuel étant associé à chaque courbe de caractéristiques, et l'unité de commande (30) étant conçue pour comparer un signal de détection reçu au codage binaire individuel et pour commander l'unité d'entraînement (20) avec une courbe de caractéristiques à laquelle est associé un codage individuel qui correspond au signal de détection reçu.

10. Dispositif de transport (1) selon une des revendications précédentes 1 à 9, **caractérisé en ce que**
l'unité de commande (30) est conçue pour recevoir un signal de programmation codé par bus et pour, au moyen du signal de programmation,
- enregistrer une dépendance logique entre le signal de détection et une caractéristique, et/ou
- enregistrer une dépendance logique entre le signal de détection et une courbe de caractéristiques, et/ou
- enregistrer une courbe de caractéristiques dans une unité de mémoire.

11. Dispositif de transport (1) selon une des revendications précédentes 1 à 10, **caractérisé en ce que**
l'unité de commande (30) est conçue pour, en fonction du signal de détection et d'un signal de commande, commuter l'unité d'entraînement (20) en alternance entre un mode disponibilité opérationnelle et un mode transport.

12. Dispositif de transport (1) selon une des revendications précédentes 1 à 11, **caractérisé en ce que**
- l'unité de commande (20) passe du mode disponibilité opérationnelle au mode transport si le signal de détection, dans le sens de transport (F), signale un passage d'un espace libre à un espace occupé ou d'un espace occupé à un espace libre, et/ou
- l'unité de commande (20) passe du mode transport au mode disponibilité opérationnelle si le signal de détection, dans le sens de transport (F), signale un passage d'un espace libre à un espace occupé ou d'un espace occupé à un espace libre.

13. Dispositif de transport (1) selon une des revendications précédentes 1 à 12, comprenant un rouleau transporteur (101) et un entraînement à courroie (102), dans lequel, pour entraîner le rouleau transporteur (101), le rouleau transporteur motorisé (100) est connecté au rouleau transporteur entraîné passivement (101) au moyen de l'entraînement à courroie.

14. Dispositif de transport (2) pour le transport d'un produit transporté, comprenant un ou plusieurs dispositifs de transport (1) selon une des revendications précédentes.
